# EUROPÄISCHE PATENTSCHRIFT

(11) **EP 4 031 943 B1**
(45) Veröffentlichungstag und Bekanntmachung des Hinweises auf die Patenterteilung: **30.10.2024**
(21) Anmeldenummer: 20760446.3
(22) Anmeldetag: 20.08.2020
(51) Int. Cl.: G05B 19/042, G05B 19/05, G05B 19/418

(54) **SELBSTÜBERPRÜFENDES SYSTEM DER AUTOMATISIERUNGSTECHNIK**
SELF-TESTING AUTOMATION SYSTEM
SYSTÈME D'AUTOMATISATION D'AUTOTEST

(30) Priorität: 18.09.2019 DE 102019125120
(43) Veröffentlichungstag der Anmeldung: 27.07.2022
(73) Patentinhaber: Endress+Hauser Process Solutions AG, 4153 Reinach (CH)
(72) Erfinder: KUHL, Michael, 87490 Haldenwang (DE); SCHLAGER, Damian, 79415 Bad Bellingen (DE); NOWAK, Claudia, 79106 Freiburg (DE); BIRGEL, Eric, 79650 Schopfheim (DE); SPRENGER, Johannes, 79541 Lörrach (DE); BRCIC, Mirko, 4310 Rheinfelden (CH)
(74) Vertreter: Kratt-Stubenrauch, Kai Michael
(86) Internationale Anmeldenummer: PCT/EP2020/073406
(87) Internationale Veröffentlichungsnummer: WO 2021/052709

(56) Entgegenhaltungen:
- EP-A1- 3 520 349
- EP-B1- 3 520 349
- DE-A1- 102016 118 613
- FR-A1- 3 075 424
- ARSHDEEP BAHGA ET AL: "Blockchain Platform for Industrial Internet of Things", JOURNAL OF SOFTWARE ENGINEERING AND APPLICATIONS, vol. 09, no. 10, 28 October 2016 (2016-10-28), pages 533 - 546, XP055403465, ISSN: 1945-3116, DOI: 10.4236/jsea.2016.910036

## Beschreibung

Die Erfindung betrifft ein System der Automatisierungstechnik.

Aus dem Stand der Technik sind bereits Feldgeräte bekannt geworden, die in industriellen Anlagen zum Einsatz kommen. In der Prozessautomatisierungstechnik ebenso wie in der Fertigungsautomatisierungstechnik werden vielfach Feldgeräte eingesetzt. Als Feldgeräte werden im Prinzip alle Geräte bezeichnet, die prozessnah eingesetzt werden und die prozessrelevante Daten, bzw. Informationen liefern oder verarbeiten. So werden Feldgeräte zur Erfassung und/oder Beeinflussung von Prozessgrößen verwendet. Zur Erfassung von Prozessgrößen dienen Messgeräte, bzw. Sensoren. Diese werden beispielsweise zur Druck- und Temperaturmessung, Leitfähigkeitsmessung, Durchflussmessung, pH-Messung, Füllstandmessung, etc. verwendet und erfassen die entsprechenden Prozessvariablen Druck, Temperatur, Leitfähigkeit, pH-Wert, Füllstand, Durchfluss etc. Zur Beeinflussung von Prozessgrößen werden Aktoren verwendet. Diese sind beispielsweise Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Geräte verstanden, die auf der Feldebene angeordnet sind.

Eine Vielzahl solcher Feldgeräte wird von der Endress+Hauser-Gruppe produziert und vertrieben.

In modernen Industrieanlagen sind Feldgeräte in der Regel über Kommunikationsnetzwerke wie beispielsweise Feldbusse (Profibus^{®}, Foundation^{®} Fieldbus, HART^{®}, etc.) mit übergeordneten Einheiten verbunden. Normalerweise handelt es sich bei den übergeordneten Einheiten um Steuereinheiten, wie beispielsweise eine SPS (speicherprogrammierbare Steuerung) oder ein DCS (Distributed Controlling System). Die übergeordneten Einheiten dienen unter anderem zur Prozesssteuerung, sowie zur Inbetriebnahme der Feldgeräte. Die von den Feldgeräten, insbesondere von Sensoren, erfassten Messwerte werden über das jeweilige Bussystem an eine (oder gegebenenfalls mehrere) übergeordnete Einheit(en) übermittelt, die die Messwerte gegebenenfalls weiterverarbeiten und an den Leitstand der Anlage weiterleiten. Der Leitstand dient zur Prozessvisualisierung, Prozessüberwachung und Prozessteuerung, sowie Diagnose und Datenspeicherung, etc. über die übergeordneten Einheiten. Daneben ist auch eine Datenübertragung von der übergeordneten Einheit über das Bussystem an die Feldgeräte erforderlich, insbesondere zur Konfiguration und Parametrierung von Feldgeräten sowie zur Ansteuerung von Aktoren. Mehr und mehr werden solche Feldbusse von Ethernet-basierten Kommunikationsnetzwerken ersetzt.

Feldgeräte erstellen eine Vielzahl unterschiedlicher Daten. Bei diesen Daten handelt es neben bereits oben genannten Messdaten von Sensoren, durch welche ein Anlagenbetreiber Informationen über die aktuellen Prozesswerte der Messstellen seiner Anlage erhält, beispielsweise um Steuerdaten, bspw. zur Stellregelung eines Aktors. Des Weiteren handelt es sich bei den Daten um Diagnose-, Historien-, und/oder Statusdaten, durch die der Anlagenbetreiber über Probleme der Feldgeräte, bzw. dem aktuellen Status der einzelnen Feldgeräte informiert wird, oder um Kalibrier/Parametrierdaten.

Heutige Anomalieerkennungssysteme in vernetzten Automatisierungstechniksystemen, welche aus mehreren Teilnehmern bestehen (beispielsweise der OT-Welt einer Prozessumgebung, also Feldgeräte, Steuereinheiten, etc.), beruhen auf historischen Daten und erkennen normales, bzw. abnormales Verhalten der zu überwachenden Systeme mittels Mustererkennung, beispielsweise mittels Verwendung von KI-("künstliche Intelligenz")-Algorithmen. Normales und abnormales Verhalten in einem solchen vernetzten System wird über den gesamten Zustandsraum der Eigenschaften der Teilnehmer, deren Beziehungen, bspw. die Anzahl der Verbindungen eines Netzwerkteilnehmers oder die zu benutzenden Dienste, und den Netzwerkeigenschaften eruiert. Solche Eigenschaften sind beispielswiese die transferierte Datenmenge, die Anzahl bzw. Dauer einer (Netzwerk)-Verbindung, die publizierten Dienste eines Netzwerkteilnehmers, etc.

Die große Varianz des Zustandsraumes über die Anzahl und die nicht-Standardisierung der Eigenschaften führt zu einer großen, nicht transparenten Menge an false positive-Meldungen. Das System verliert daher seine primäre Funktion, wodurch eine mangelnde Vertrauensfähigkeit, insbesondere der übermittelten Prozessgrößen entsteht und wodurch besteht hoher Aufwand für den Betreiber besteht.

Die Maßnahmen auf aufgetretene, bzw. erkannte Anomalien sind heutzutage überwiegend reaktiv. Dadurch besteht kein Gewinn für den Betreiber. Die zu prüfenden Entitäten besitzen aktuell nicht die Möglichkeiten, auf individuelle Eigenschaften aller Teilnehmer einzugehen. Es besteht darüber hinaus keine zuverlässige Möglichkeit, die Abschaltbarkeit der zu prüfenden Entitäten zu verhindern oder einzelne Prüffunktionen im laufenden Betrieb zu verändern/auszuschalten. Heutige Anomaliesysteme sind zentral verwaltet - dadurch erhöht sich die Gefahr des "single points of failure". Durch die zentrale Verwaltung ist es nicht möglich, dass sich die Teilnehmer deren Eigenschaften und Beziehungen dynamisch definieren/aushandeln. Anomalien können außerdem in der Regel nicht verhindert werden, sondern nur nachträglich auf diese reagiert werden.

Die Aufgabe der vorliegenden Erfindung besteht daher darin, eine zuverlässige, proaktive und sicherheitsgerichtete Anomaliedetektion in einem System der Automatisierungstechnik anzubieten.

DE10 2016 118613 A1 betrifft ein System und ein Verfahren zum Bestimmen oder Überwachen einer Prozessgröße in einer Anlage der Automatisierungstechnik mit zumindest einer übergeordneten Einheit, SPS, und einer Vielzahl von Feldgeräten, wobei die Feldgeräte Daten generieren, wobei die Feldgeräte miteinander in Kommunikationsverbindung stehen, und wobei die übergeordnete Einheit und die Feldgeräte Teilnehmerknoten, TK, entsprechend einer Distributed Ledger, bzw. Blockchain-Technologie darstellen.

Die Aufgabe wird durch ein System der Automatisierungstechnik gemäß Patentanspruch 1 gelöst.

Der Vorteil des erfindungsgemäßen Systems liegt in einer zuverlässigen Detektion von Anomalien, welche innerhalb der Datenbank auftreten. Anomalien betreffen zum einen Fehlfunktionen der einzelnen Teilnehmerknoten, aber auch Veränderungen des Verhaltens der Teilnehmerknoten, hervorgerufen durch Attacken, bzw. Angriffe auf Teilnehmerknoten durch Unbefugte. Bei der Datenbank handelt es sich um eine Distributed-Ledger-Datenbank. Zumindest ein Teil der Teilnehmerknoten der Datenbank wird durch Automatisierungskomponenten gebildet. Bei diesen handelt es um Komponente, welche in der Automatisierungstechnik eingesetzt werden und dem Erheben, Weiterleiten und Verarbeiten von Daten dienen, welche aus einem verfahrenstechnischen Prozess stammen und/oder genutzt werden, um diesen zu steuern. Demzufolge handelt es sich bei den Automatisierungskomponenten um eingangs definierte Feldgeräte, aber auch um entfernt angeordnete Einheiten wie beispielsweise Cloud-Plattformen oder um IT-Komponenten wie Netzwerkswitches. Die Teilnehmerknoten stehen mittels Internet oder unter Ausnutzung von nicht internet-basierten Telekommunikationstechniken (bspw. über Satellit) miteinander in Kontakt. Es kann vorgesehen sein, dass die Automatisierungskomponenten noch an ein zusätzliches Netzwerk, beispielsweise einen Feldbus angeschlossen sind. Die Daten müssen dann aber synchron über beide Netzwerke (Internet und Feldbus) gesendet werden, um Anomalien zuverlässig detektieren zu können.

Durch die Implementierung des Regelwerks in jedem Teilnehmerknoten ist das System autonom betreibbar, da jeder Teilnehmerknoten eine Verletzung des Regelwerks prüft. Eine zentrale Einheit, welche zur Anomaliendetektion eingesetzt wird, ist nicht mehr benötigt. Das System weist, auch durch Redundanzen, eine hohe Zuverlässigkeit auf. Das Regelwerk wird apriori dynamisch durch jeden einzelnen Teilnehmerknoten ausgehandelt. Der Zustandsraum wird dadurch drastisch minimiert, so dass weniger "false-positive"-Anomalien detektiert werden und ein schnelles, deterministisches, reaktives Sicherheitssystem geschaffen wird, welches fest einsehbaren und für jeden Teilnahmeknoten transparente Regeln umfasst.

Durch die Verwendung einer Distributed-Ledger-Datenbank ist das System transparent, dezentral und selbstverwaltend. Da alle Daten von jedem Teilnehmerknoten zu jederzeit gespeichert werden, sind detektierte Regelverletzungen, bzw. Anomalien für jeden Teilnehmerknoten zu jeder Zeit nicht abstreitbar.

Gemäß einer ersten Variante des erfindungsgemäßen Systems ist vorgesehen, dass die dezentrale Datenbank ausschließlich die Automatisierungskomponenten als Teilnehmerknoten umfasst.

Gemäß einer zweiten Variante des erfindungsgemäßen Systems ist vorgesehen, dass die dezentrale Datenbank neben den Automatisierungskomponenten weitere Teilnehmerknoten umfasst. Die Teilnehmerknoten können somit auch in eine bestehende Datenbank eingefügt werden. Die weiteren Teilnehmerknoten können beispielsweise IT-Komponenten wie Server, etc. sein, welche sich nicht örtlich in der Nähe der Anlage befinden müssen.

Gemäß einer vorteilhaften Ausgestaltung des erfindungsgemäßen Systems ist vorgesehen, dass das Regelwerk als Programmcode auf jedem der Teilnehmerknoten gespeichert ist, welcher Programmcode von den Teilnehmerknoten ausgeführt wird. Im Rahmen Blockchain-basierter Datenbanken werden solche Programmcodes als "Smart Contracts" bezeichnet. Smart Contracts bilden insbesondere Verträge ab oder überprüfen oder unterstützen die technische Verhandlung oder Abwicklung eines Vertrags, können aber beliebig erweitert werden, so dass das Regelwerk abbildbar ist.

Gemäß einer vorteilhaften Weiterbildung des erfindungsgemäßen Systems ist vorgesehen, dass das Regelwerk Algorithmen beinhaltet, welche bei Ausführung auf den Teilnehmerknoten eine Überprüfung auf eine bevorstehende Verletzung des Regelwerks durchführen.

Gemäß einer vorteilhaften Ausgestaltung des erfindungsgemäßen Systems ist vorgesehen, dass die Algorithmen KI-basierte Auswertungen zur Überprüfung einer bevorstehenden Verletzung des Regelwerks umfassen. Geeignet sind beispielsweise Algorithmen, welche neuronale Netzwerke nutzen oder Deepl-Learning-basiert Algorithmen. Dadurch ist eine stete Verbesserung des Regelwerks ermöglicht.

Gemäß einer bevorzugten Ausgestaltung des erfindungsgemäßen Systems ist vorgesehen, dass die nach einer KI-Auswertung eines Teilnehmerknotens entstandenen Ergebnisse den Algorithmen der weiteren Teilnehmerknoten mitgeteilt werden. Auf diese Art und Weise "lernt" nicht jeder der Teilnehmerknoten separat, sondern tauscht die Erkenntnisse aus, so dass das Kollektiv der Teilnehmerknoten gemeinsam lernt, einen Erfahrungsschatz ausbildet und das Regelwerk stetig verbessert.

Gemäß einer alternativen vorteilhaften Ausgestaltung des erfindungsgemäßen Systems ist vorgesehen, dass die Algorithmen schwellwertbasierte Auswertungen zur Überprüfung einer bevorstehenden Verletzung des Regelwerks umfassen. Insbesondere für Teilnehmerknoten, welchen nur begrenzte Ressourcen in Hinblick auf Leistung, Speicher und/oder Energie zur Verfügung stehen, ist diese Alternative geeignet. Hier entfällt zwar der Lernaspekt. Neue Erkenntnisse können aber durch Aufspielen einer neuen Version des Regelwerks eingebracht werden.

Gemäß einer vorteilhaften Ausgestaltung des erfindungsgemäßen Systems ist vorgesehen, dass das Regelwerk verschiedene Arten von Algorithmen aufweist und wobei die Teilnehmerknoten ausgestaltet sind, in Abhängigkeit ihrer jeweils zur Verfügung stehenden Ressourcen zumindest einen der Algorithmen auszuwählen und auszuführen. So können bestimmte, leistungsstarke Teilnehmerknoten beispielsweise Kt-basierte Algorithmen verwenden und das Regelwerk verbessern, während andere, leistungsschwächere Teilnehmerknoten schwellwertbasierte Algorithmen verwenden.

Gemäß einer bevorzugten Ausgestaltung des erfindungsgemäßen Systems ist vorgesehen, dass das Regelwerk einen dynamischen und einen statischen Anteil aufweist, wobei der Inhalt des statischen Anteils unveränderlich ist und wobei der Inhalt des dynamischen Anteils veränderbar und/oder erweiterbar ist.

Gemäß einer vorteilhaften Ausgestaltung ist vorgesehen, dass das erfindungsgemäße System derart ausgestaltet ist, dass der Inhalt des dynamischen Anteils im Falle einer Zustimmung eines vorbestimmten Anteils der Teilnehmerknoten verändert und/oder erweitert wird. Beispielsweise soll ein erlaubter Wertebereich für ein Feldgerät als Teilnehmerknoten geändert werden. Diese Änderung des Regelwerks wird von dem Feldgerät als Teilnehmerknoten, oder beispielsweise einem Bedien-PC des Benutzers, welcher ebenfalls ein Teilnehmerknoten ist, vorgeschlagen. Bei der Änderung wird insbesondere von allen Teilnehmerknoten geprüft, ob die Änderung eine zulässige Kategorie betrifft und/oder ob der Teilnehmerknoten, welcher die Änderung vorschlägt, authentifiziert werden kann. Nur, wenn beispielsweise mehr als die Hälfte der Teilnehmerknoten dies bestätigen können, wird der dynamische Anteil des Regelwerks entsprechend geändert.

Gemäß einer vorteilhaften Ausgestaltung des erfindungsgemäßen Systems ist vorgesehen, dass das Regelwerk folgende Regeln umfasst:
- Dienste, über welche die Teilnehmerknoten mit anderen Teilnehmerknoten gemäß dem Regelwerk jeweils kommunizieren dürfen;
- Einen erlaubten Wertebereich, in welchem in den Transaktionen der Teilnehmerknoten enthaltene Messwerte vorgesehen sind;
- Eine maximale Paketrate und Bandbreite eines jeweiligen Teilnehmerknotens;
- Eine maximale Anzahl gleichzeitiger Verbindungen eines Teilnehmerknotens;
- Ein maximales Verhältnis von Zeit und neuen Verbindungen eines Teilnehmerknotens;
- Eine maximale Zeit für bestehende Verbindungen von oder zu einem Teilnehmerknoten;
- Fehlerrate bei Verbindungen zwischen Teilnehmerknoten;
- Ressourcennutzung eines Teilnehmerknotens;
- Mess- und Steuerungswerteverhalten
- Automatisierungskommunikationsmuster (z.B. verhalten der azyklischen und zyklischen Kommunikation des Echtzeitbusses)
- Parametereinstellungen
- Daten- und Kommunikationsheuristiken bzw. Muster
- Metakommunikationsdaten;
- Schnittstellennutzung eines Teilnehmerknotens.

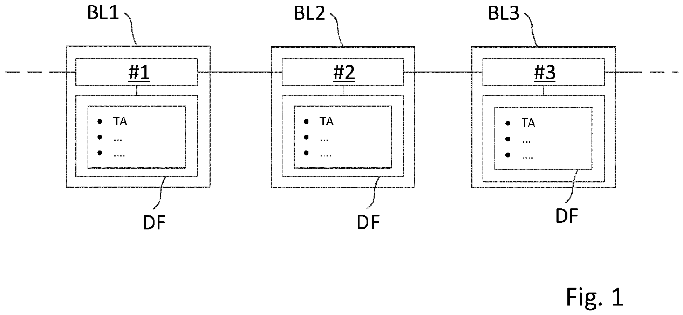

Die Erfindung wird anhand der nachfolgenden Figuren näher erläutert. Es zeigen
Fig. 1: eine Erläuterung einer Datenbank, welche entsprechend der Distributed-Ledger-Technologie ausgestaltet sind; und
Fig: 2: ein Ausführungsbeispiel des erfindungsgemäßen Systems.

Fig. 1 zeigt eine Erläuterung einer dezentralen Datenbank DB, welche entsprechend einer Distributed-Ledger-Technologie ausgestaltet sind. Im vorliegenden Fall basiert die Datenbank DB auf der Blockchain-Technologie. Die Blockchain-Technologie wurde als Backbone der Internet-Währung "Bitcoin" bekannt. Eine Blockchain, also eine Kette verknüpfter Datenblöcke BL1, BL2, BL3 erlaubt eine hohe Datenintegrität. Im Folgenden sei die Funktionsweise einer Datenbank DB, welche für die Erfindung verwendet wird, kurz erläutert.

Ein besagter Datenblock BL1, BL2, BL3 besteht in der Regel aus zumindest zwei Komponenten: Zum einem ist das ein Datenfeld DF. In diesem Datenfeld DF sind Daten in Form von Transaktionen TA gespeichert. Als Transaktion TA wird eine Übermittlung der Daten von einem ersten Teilnehmerknoten TK1, TK2, ..., TK6 zu einem zweiten Teilnehmerknoten TK1, TK2, ..., TK6 in einem Kommunikationsnetzwerk, beispielsweise das Internet, bezeichnet. Eine Transaktion TA enthält einen übermittelten Wert, beispielsweise Daten des Feldgeräts FG, sowie den Sender und den Empfänger der Transaktion TA. Als Teilnehmerknoten TK1, TK2, ..., TK6 werden alle Geräte bezeichnet, welche die Datenbank bilden, bzw. mit dieser verbunden sind und die Distributed-Ledger-Funktionalität erlauben.

Ein Datenfeld DF eines Datenblocks BL1, BL2, BL3 enthält zumindest eine Transaktion TA, häufiger mehrere Transaktionen TA.

Zum anderen enthält ein Datenblock BL1, BL2, BL3 eine Prüfsumme #1, #2, #3. Eine solche Prüfsumme #1, #2, #3 ist ein Hashwert und wird durch mitunter aufwendige Berechnungen erstellt. Hierfür werden alle Transaktionen TA des Datenfelds eines Blocks BL1, BL2, BL3 zu einem Zwischenwert berechnet. Hierfür wird beispielsweise die Merkle-Root der Gesamtzahl der Transaktionen TA berechnet. Auf das genaue Funktionsprinzip wird an dieser Stelle nicht eingegangen. Es sei hierfür beispielsweise auf https://en.wikipedia.org/wiki/Merkle_tree verwiesen.

Dieser errechnete Zwischenwert wird anschließend mit der Prüfsumme #1, #2, #3 des vorherigen Datenblocks BL1, BL2, BL3 zur Prüfsumme #1, #2, #3 des aktuellen Datenblocks BL1, BL2, BL3 verrechnet. Beispielsweise enthält der in Fig. 1 gezeigte Datenblock BL2 eine Prüfsumme #2. Diese Prüfsumme #2 wurde also aus den in dem Datenfeld DF des Datenblocks B2 gespeicherten Transaktionen TA und der Prüfsumme #1 des vorangehenden Datenblocks BL1 berechnet. Analog dazu enthält der in Fig. 1 gezeigte Datenblock BL3 eine Prüfsumme #3. Diese Prüfsumme #3 wurde also aus den in dem Datenfeld DF des Datenblocks B3 gespeicherten Transaktionen TA und der Prüfsumme #2 des vorangehenden Datenblocks BL2 berechnet.

Die Integrität der Daten, also die Sicherung der Daten gegen nachträgliche Manipulationen, ist somit durch die Speicherung der Prüfsumme #1, #2, #3 des vorangehenden Datenblocks BL1, BL2 im jeweils nachfolgenden Datenblock BL2, BL3 gesichert. Eine Blockchain besteht also aus einer Reihe von Datenblöcken BL1, BL2, BL3, in denen jeweils eine oder mehrere Transaktionen TA zusammengefasst und mit der Prüfsumme #1, #2, #3 versehen sind. Eine Änderung von Daten erzeugt einen geänderten Zwischenwert, wodurch auch die Prüfsumme #1, #2, #3 des jeweiligen Datenblocks BL1, BL2, BL3 verändert wird. Der darauffolgende Datenblock BL1, BL2, BL3 passt somit nicht mehr zu dem vorangehenden Datenblock BL1, BL2, BL3. Daten eines einmal erfolgreich validierten Datenblocks BL1, BL2, BL3 sind dadurch für einen Angreifer nicht mehr veränderbar.

Neue Datenblöcke BL1, BL2, BL3 werden in regelmäßigen Zeitabständen erstellt. In das Datenfeld des neuen Datenblocks BL1, BL2, BL3 werden alle Transaktionen TA gespeichert, welche nach dem Zeitpunkt der erstellen des letzten Datenblocks BL1, BL2, BL3 erstellt wurden.

Die Komplexität der Blockerstellung kann dadurch erhöht werden, dass die erstellte Prüfsumme #1, #2, #3 ein vorgegebenes Format aufweisen muss. Beispielsweise wird festgelegt, dass die Prüfsumme 24 Stellen lang sein muss, wobei die ersten vier Stellen den Zahlenwert 0 aufweisen müssen. Hierfür wird neben dem Zwischenwert der Transaktionen TA und der Prüfsumme des vorherigen Datenblocks eine zu ermittelnde Zahlenfolge, als "Nonce" bezeichnet, mit einer festgelegten Länge zur Berechnung der Prüfsumme #1, #2. #3 des aktuellen Datenblocks BL1, BL2, BL3 verwendet. Die Berechnung der neuen Prüfsumme #1, #2, #3 dauert entsprechend länger, da nur wenige Noncen vorhanden sind, welche zur Berechnung einer Prüfsumme #1, #2, #3 mit den vorgegebenen Kriterien führen. Das Auffinden einer solchen geeigneten Nonce verursacht hierbei den beschriebenen zusätzlichen Zeitaufwand.

Nachdem die Prüfsumme #1, #2, #3 eines neuen Datenblocks BL1, BL2, BL3 erstellt wurde, wird der Datenblock an alle Teilnehmerknoten TK1, TK2, ..., TK6 übermittelt. Die validierungsfähigen Teilnehmerknoten TK1, TK2, TK3, TK4 überprüfen nun die Prüfsumme #1, #2, #3 des neuen Datenblocks BL1, BL2, BL3. Erst nach erfolgreicher Validierung wird der Datenblock BL1, BL2, BL3 in allen Teilnehmerknoten TK gespeichert. Insbesondere wird hierzu eine erfolgreiche Validierung von mehr als der Hälfte aller validierungsfähigen Teilnehmerknoten TK1, TK2, TK3, TK4 benötigt. Ein Angreifer müsste daher zum Einschleusen/Erstellen eines fremden, schädlichen Datenblocks BL1, BL2, BL3 eine große Anzahl an validierungsfähigen Teilnehmerknoten TK1, TK2, TK3, TK4 manipulieren, bzw. kontrollieren, um den eingeschleusten Datenblock BL1, BL2, BL3 erfolgreich zu validieren. Bei steigender Anzahl an validierungsfähigen Teilnehmerknoten TK1, TK2, TK3, TK4 ist dies als so gut wie unmöglich anzusehen.

Für die Validierung eines Datenblocks BL1, BL2, BL3 ist ein wesentlich geringerer Aufwand als zur Erstellung des Datenblocks BL1, BL2, BL3 nötig. Die Prüfsumme #1, #2, #3 wird rückgerechnet, der Zwischenwert der Transaktionen TA, bzw. die Prüfsumme #1, #2, #3 des vorherigen Datenblocks BL1, BL2, BL3 zurückgewonnen und mit dem tatsächlichen Zwischenwert, bzw. mit der tatsächlichen Prüfsumme #1, #2, #3 des vorherigen Datenblock BL1, BL2, BL3 verglichen. Stimmen diese Werte überein, so ist der Datenblock BL1, BL2, BL3 erfolgreich validiert.

Im Folgenden ist beschrieben, wie mithilfe einer solchen Datenbank DBein selbstüberwachendes System für eine Anlage der Automatisierungstechnik eingerichtet werden kann:

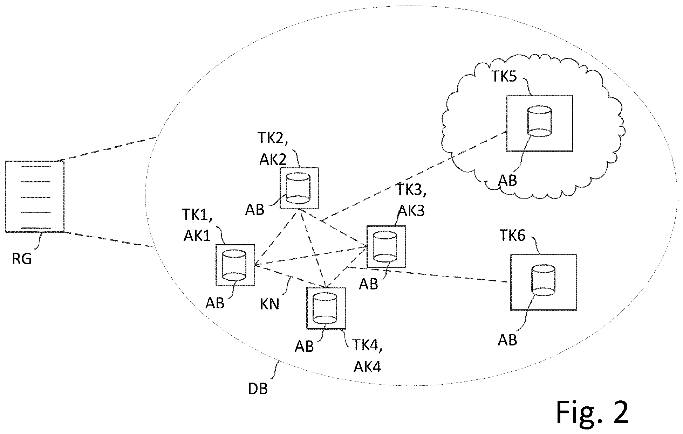

In Fig. 2 ist das erfindungsgemäße System schematisch dargestellt. Die Datenbank DB, die wie obig beschrieben aufgebaut ist, besteht im Kern aus sechs Teilnehmerknoten TK1, TK2, TK3, TK4, TK5, TK6 welche als Full-Nodes ausgebildet sind. Diese speichern jeweils ein Abbild AB des Inhalts der Datenbank DB, also die Kette der Datenblöcke DB1, DB2, DB3. Bei den Teilnehmerknoten TK1, TK2, TK3, TK4 handelt es sich um Automatisierungskomponenten, beispielsweise Feldgeräte (Teilnehmerknoten TK1, TK2, TK3). Durch Ausführen einer Distributed-Ledger-Software, oder eines -Softwarestacks können diese Automatisierungskomponenten als Teilnehmerknoten wirken, das Abbild des Inhaltes der Datenbank DB laden und Daten in die Datenbank schreiben und Transaktionen verifizieren. Es kann jedoch keine Transaktionen verifizieren. Beispiele für solche Feldgeräte sind im einleitenden Teil der Beschreibung genannt. Die Feldgeräte erheben beispielsweise Messwerte eines verfahrenstechnischen Prozesses und übermitteln diese innerhalb der Datenbank, beispielsweise an eine Steuereinheit (Teilnehmerknoten TK4).

Bei den Teilnehmerknoten TK5 und TK6 handelt es sich um IT-Komponenten, insbesondere bei dem Teilnehmerknoten TK5 um einen Cloud-Server und bei dem Teilnehmerknoten TK6 um einen Bedien-PC eines Benutzers. Sind diese beiden Teilnehmerknoten im OT-Netzwerk der Anlage eingebracht oder weisen prozessrelevante Bedienapplikationen auf, fallen diese ebenfalls unter die Definition einer Automatisierungskomponente.

Auf jedem der Teilnehmerknoten TK1, ..., ist ein Regelwerk als Programmcode integriert. Dieses enthält Informationen über über die Anzahl und die Identität aller Teilnehmerknoten TK1, ..., TK6, sowie Regeln bezüglich Aktionen, Eigenschaften und Zustände von jedem der Teilnehmerknoten TK1, ..., TK6 und erlaubt einem Teilnehmerknoten TK1, ..., TK6 bei Ausführung ein Überprüfen der Transaktionen der Teilnehmerknoten entsprechend des Regelwerks RG und ermöglicht dadurch eine Anomalieerkennung. Im Sinne der im vorliegenden Beispiel verwendeten Blockchain-Technologie als Datenbank sind kann ein solches Regelwerk als Smart Contracts realisiert sein.

Die Verletzung eines Regelwerks, bzw. eine daraus folgende Anomalie kann mittels zweier verschiedener Verfahren detektiert werden. Beide sind per entsprechenden Algorithmen realisiert, welche je nach zur Verfügung stehender Ressourcen der Teilnehmerknoten TK1, ..., TK6 auf diesen implementiert werden können.

Zum einen ermöglichen die Algorithmen schwellwertbasierte Auswertungen. Hierbei werden Inhalte von Transaktionen der Teilnehmerknoten TK1, ..., TK6 mit den im Regelwerk RG stehenden Daten verglichen. Weichen diese voneinander ab, bzw. um einen bestimmten Wert (Schwellwert) voneinander ab, so stellt dies eine Anomalie, bzw. eine Regelverletzung dar.

Alternativ stellen die Algorithmen KI-basierte Auswertungen zur Überprüfung einer bevorstehenden Verletzung des Regelwerks RG zur Verfügung. Geeignet sind beispielsweise Algorithmen, welche neuronale Netzwerke nutzen oder Deep-Learning-basiert Algorithmen. Die nach einer Kl-Auswertung eines Teilnehmerknotens TK1, ..., TK6 entstandenen Ergebnisse den Algorithmen können den weiteren Teilnehmerknoten TK1, ..., TK6 mitgeteilt werden, um einen Erfahrungsschatz zu etablieren.

Ebenso enthält das Regelwerk Maßnahmenkatalog, verknüpft zu detektierten Anomalien, wodurch Aktionen zur Behebung von Störungen und/oder Aktionen zur Prävention von weiteren Fehlern/Angriffen initiiert werden.

Im Folgenden sei ein erstes Ausführungsbeispiel beschrieben, in welchem anhand des Regelwerks RG bestimmt wird, ob eine Verletzung des Regelwerks RG, bzw. eine Anomalie vorliegt:
Ein neues, nicht bekanntes Gerät versucht der Datenbank DB als neuer Teilnehmerknoten beizutreten. Das Beitreten der Datenbank ist jedoch nur möglich, wenn in dem Regelwerk RG erlaubt ist, dass ein potentieller Teilnehmer mit einer eineindeutigen Identifikationsinformation versehen ist, die auch als autorisierter Teilnehmer im Regelwerk RG definiert ist.

Hier kann zwischen drei verschiedenen Fällen unterschieden werden, welche unterschiedliche Reaktionen der Teilnehmerknoten auslösen.

Zum einen kann die Beitrittsanfrage ungeplant und ungewollt sein. In diesem Fall hat das anfragende Gerät hat keine Berechtigung. Seine Identifikationsinformation ist also nicht im Regelwerk RG aufgeführt, so dass dieser sich nicht authentifizieren oder identifizieren kann. Die Teilnehmerknoten TK1, ..., TK6 empfangen die Zutrittsanfrage als Transaktion, prüfen deren Inhalt, in diesem Fall die Absenderidentifikation und detektieren eine Regelverletzung (per schwellwertbasierter Auswertung und/oder per KI-Algorithmus möglich). Als resultierende, mit dieser Regelverletzung verknüpfte Maßnahme im Regelwerk wird jegliche nicht vertragskonforme Kommunikation oder Transaktion innerhalb der Datenbank DB mit diesem Gerät unterbunden (Layer 7 oder Edge/Switch kann blocken).

In einem zweiten Fall ist die Beitrittsanfrage geplant und gewollt. Der neuer potentielle Teilnehmerknoten der Datenbank stellt die Zutrittsanfrage. Die Teilnehmerknoten TK1, ..., TK6 empfangen die Zutrittsanfrage als Transaktion, prüfen deren Inhalt, in diesem Fall die Absenderidentifikation und, dass diese im Regelwerk RG vorhanden ist. Das Gerät hat somit eine gültige Berechtigung und kann sich authentifizieren oder identifizieren. Anschließend wird das Gerät als neuer Teilnehmerknoten in die Datenbank DB aufgenommen.

In einem zweiten Fall ist die Beitrittsanfrage ungeplant, aber gewollt. Auch in diesem Fall hat das anfragende Gerät hat keine Berechtigung. Seine Identifikationsinformation ist also nicht im Regelwerk RG aufgeführt, so dass dieser sich nicht authentifizieren oder identifizieren kann. Die Teilnehmerknoten TK1, ..., TK6 empfangen die Zutrittsanfrage als Transaktion, prüfen deren Inhalt, in diesem Fall die Absenderidentifikation und detektieren eine Regelverletzung. Als Maßnahme einigen sich die bestehenden Teilnehmerknoten TK1, ..., TK6 aber darauf, die neue Identifikationsinformation des anfragenden Geräts ins Regelwerk RG einzufügen. Dies kann geschehen, indem die bestehenden Teilnehmerknoten TK1, ..., TK6die Identifikation des Geräts und seines einzubringenden Regelwerks prüfen, bzw. ein neues Regelwerk aushandeln, basieren auf den neuen Informationen des Geräts und den bisherigen Informationen des bestehenden Regelwerks RG. In beiden Fällen wird das Gerät als neuer Teilnehmerknoten in einem Mehrheitsverfahren, bzw. Voting-Prozess, entweder akzeptiert oder verworfen. Im Falle, dass das Gerät als neuer Teilnehmerknoten akzeptiert wird, muss diesen dem neu ausgehandelten Regelwerk RG ebenfalls zustimmen.

Das Gerät kann auch als neuer Teilnehmerknoten hinzugefügt werden, indem es seine Identifikationsinformation darlegt und dem bisherigen Regelwerk RG zustimmt, ohne selbst neue Regeln einzubringen. Die bestehenden Teilnehmerknoten TK1, ..., TK6 prüfen die Identifikationsinformation und nehmen das Gerät als neuen Teilnehmerknoten auf, nachdem geprüft wird, ob das bisherige Regelwerk RG durch die Eigenschaften des neuen Teilnehmerknotens eingehalten werden kann. Auch hierfür kann das oben beschrieben Mehrheitsverfahren, bzw. der Voting-Prozess, durchgeführt werden.

Abschließend wird ein weiteres Ausführungsbeispiel für das erfindungsgemäße Verfahren beschrieben. Die Teilnehmerknoten TK1, TK2, TK3 erheben als Feldgeräte ständig Messwerte eines verfahrenstechnischen Prozesses und übermitteln diese an die übergeordnete Einheit (Teilnehmerknoten TK4). Durch Kalibration und Eichung ist ein Wertebereich festgelegt und im Regelwerk RG gespeichert worden, in welchen sich die Messwerte jeweils bewegen dürfen. Die Teilnehmerknoten TK1, ..., TK6 prüfen die Messwerte, welche in den Transaktionen der Teilnehmerknoten TK1, TK2, TK3 enthalten sind, entsprechend des Regelwerks RG. Bei einer Über-, bzw. Unterschreitung des Wertebereichs generieren diese als Maßnahme eine Warnung an den Anlagenbetreiber. Das Detektieren der Über-, bzw. Unterschreitung kann durch schwellwertbasierte Auswertung oder mittels KI-Algorithmen erfolgen. Im Falle, dass ein Teilnehmerknoten TK1, ..., TK6 KI-Algorithmen verwendet, kann dieser auch eine noch nicht erfolgte, aber absehbare Über-, bzw. Unterschreitung des Wertebereichs voraussehen ("Predictive Maintenance").

### Bezugszeichenliste

| | |
|---|---|
| AK1, ..., AK4 | Automatisierungskomponenten |
| BL1, BL2, BL3 | Datenblock |
| BO | Dashboard |
| DB | dezentrale Datenbank |
| EL | Elektronikeinheit |
| FG | Feldgerät |
| KN | Kommunikationsnetzwerk |
| KS | Kommunikationsschnittstelle |
| RG | Regelwerk |
| TA | Transaktion |
| TK1, ..., TK6 | Teilnehmerknoten |
| #1, #2, #3 | Hashwerte der Datenblöcke |

## Patentansprüche

1. System der Automatisierungstechnik, umfassend:
- eine dezentrale, verteilte Datenbank (DB) nach der Distributed-Ledger-Technik, insbesondere eine Blockchain, umfassend eine Vielzahl von Teilnehmerknoten (TK1, ..., TK6), wobei die Teilnehmerknoten (TK1, ..., TK6) ausgestaltet sind, Daten, bzw. Informationen, per Transaktionen (TA) miteinander auszutauschen, wobei die Datenbank (DB) ausgestaltet ist, die Transaktionen (TA) zu speichern, insbesondere in miteinander verknüpften Datenblöcken (BL1, BL2, BL3);
- ein Regelwerk (RG), welches auf jedem der Teilnehmerknoten (TK1, ..., TK6) implementiert ist, wobei das Regelwerk (RG) Informationen über die Anzahl und die Identität aller Teilnehmerknoten (TK1, ..., TK6), sowie Regeln bezüglich Aktionen, Eigenschaften und Zustände von jedem der Teilnehmerknoten (TK1, ..., TK6) umfasst; und
eine Vielzahl von Automatisierungskomponenten (AK1, ..., AK4), welche Teilnehmerknoten (TK1, ..., TK6) der dezentralen Datenbank (DB) sind,
wobei jeder der Teilnehmerknoten (TK1, ..., TK6) ausgestaltet ist, Transaktionen (TA) zwischen den Teilnehmerknoten (TK1, ..., TK6) anhand des Regelwerks (RG) jederzeit zu überprüfen, bzw. zu validieren,
wobei jeder der Teilnehmerknoten (TK1, ..., TK6) ausgestaltet ist, bei Detektion einer Verletzung des Regelwerks (RG) zumindest eine der folgenden Maßnahmen durchzuführen:
i. Sperren der Kommunikation innerhalb der Datenbank (DB) mit einem betroffener Teilnehmerknoten (TK1, ..., TK6);
ii. Stoppen der Kommunikation außerhalb der Datenbank (DB) mit einem betroffenen Teilnehmerknoten (TK1, ..., TK6);
iii. Schließen von Ports;
iv. Stoppen der Dienste eines jeden Teilnehmerknotens (TK1, ..., TK6).

2. System nach Anspruch 1, wobei die dezentrale Datenbank (DB) ausschließlich die Automatisierungskomponenten (AK1, ..., AK4) als Teilnehmerknoten (TK1, ..., TK6) umfasst.

3. System nach Anspruch 1, wobei die dezentrale Datenbank (DB) neben den Automatisierungskomponenten (AK1, ..., AK4) weitere Teilnehmerknoten (TK1, ..., TK6) umfasst.

4. System nach zumindest einem der vorherigen Ansprüche, wobei das Regelwerk (RG) als Programmcode auf jedem der Teilnehmerknoten (TK1, ..., TK6) gespeichert ist, welcher Programmcode von den Teilnehmerknoten (TK1, ..., TK6) ausgeführt wird.

5. System nach zumindest einem der vorherigen Ansprüche, wobei das Regelwerk (RG) Algorithmen beinhaltet, welche bei Ausführung auf den Teilnehmerknoten (TK1, ..., TK6) eine Überprüfung auf eine bevorstehende Verletzung des Regelwerks (RG) durchführen.

6. System nach Anspruch 5, wobei die Algorithmen KI-basierte Auswertungen zur Überprüfung einer bevorstehenden Verletzung des Regelwerks (RG) umfassen.

7. System nach Anspruch 6, wobei die nach einer Kl-Auswertung eines Teilnehmerknotens (TK1, ..., TK6) entstandenen Ergebnisse den Algorithmen der weiteren Teilnehmerknoten (TK1, ..., TK6) mitgeteilt werden.

8. System nach Anspruch 5, wobei die Algorithmen schwellwertbasierte Auswertungen zur Überprüfung einer bevorstehenden Verletzung des Regelwerks (RG) umfassen.

9. System nach zumindest einem der Ansprüche 5 bis 8, wobei das Regelwerk (RG) verschiedene Arten von Algorithmen aufweist und wobei die Teilnehmerknoten (TK1, ..., TK6) ausgestaltet sind, in Abhängigkeit ihrer jeweils zur Verfügung stehenden Ressourcen zumindest einen der Algorithmen auszuwählen und auszuführen.

10. System nach zumindest einem der vorherigen Ansprüche, wobei das Regelwerk (RG) einen dynamischen und einen statischen Anteil aufweist, wobei der Inhalt des statischen Anteils unveränderlich ist und wobei der Inhalt des dynamischen Anteils veränderbar und/oder erweiterbar ist.

11. System nach Anspruch 10, welches derart ausgestaltet ist, dass der Inhalt des dynamischen Anteils im Falle einer Zustimmung eines vorbestimmten Anteils der Teilnehmerknoten (TK1, ..., TK6) verändert und/oder erweitert wird.

12. System nach zumindest einem der vorherigen Ansprüche, wobei das Regelwerk (RG) folgende Regeln umfasst:
- Dienste, über welche die Teilnehmerknoten (TK1, ..., TK6) mit anderen Teilnehmerknoten (TK1, ..., TK6) gemäß dem Regelwerk (RG) jeweils kommunizieren dürfen;
- Einen erlaubten Wertebereich, in welchem in den Transaktionen der Teilnehmerknoten (TK1, ..., TK6) enthaltene Messwerte vorgesehen sind;
- Eine maximale Paketrate und Bandbreite eines jeweiligen Teilnehmerknotens (TK1, ..., TK6);
- Eine maximale Anzahl gleichzeitiger Verbindungen eines Teilnehmerknotens (TK1, ..., TK6);
- Ein maximales Verhältnis von Zeit und neuen Verbindungen eines Teilnehmerknotens (TK1, TK6);
- Eine maximale Zeit für bestehende Verbindungen von oder zu einem Teilnehmerknoten (TK1, TK6);
- Fehlerrate bei Verbindungen zwischen Teilnehmerknoten (TK1, ..., TK6);
- Ressourcennutzung eines Teilnehmerknotens (TK1, ..., TK6);
- Mess- und Steuerungswerteverhalten
- Automatisierungskommunikationsmuster (z.B. verhalten der azyklischen und zyklischen Kommunikation des Echtzeitbusses)
- Parametereinstellungen
- Daten- und Kommunikationsheuristiken bzw. Muster
- Metakommunikationsdaten;
- Schnittstellennutzung eines Teilnehmerknotens (TK1, ..., TK6).

## Claims

1. An automation system, comprising:
- A decentralized, distributed database (DB) based on distributed ledger technology, in particular a blockchain, comprising a number of participating nodes (TK1, ... , TK6), wherein the participating nodes (TK1, ... , TK6) are configured to share data or information with each other via transactions (TA), wherein the database (DB) is configured to save the transactions (TA), in particular in interlinked data blocks (BL1, BL2, BL3);
- A policy (RG) which is implemented on each of the participating nodes (TK1, ... , TK6), wherein the policy (RG) comprises information about the number and identity of all participating nodes (TK1, ... , TK6) as well as rules regarding actions, properties, and statuses of each of the participating nodes (TK1, ... , TK6); and
A number of automation components (AK1, ... , AK4), which are participating nodes (TK1, ... , TK6) of the decentralized database (DB),
wherein each of the participating nodes (TK1, ... , TK6) is configured to check and validate transactions (TA) between the participating nodes (TK1, ..., TK6) at all times based on the policy (RG),
wherein each of the participating nodes (TK1, ... , TK6) is configured to implement at least one of the following measures if a violation of the policy (RG) is detected:
i. Blocking communication within the database (DB) with an affected participating node (TK1, ... , TK6);
ii. Blocking communication outside the database (DB) with an affected participating node (TK1, ... , TK6);
iii. Closing ports;
iv. Stopping the services of each participating node (TK1, ... , TK6).

2. The system as claimed in claim 1, wherein the decentralized database (DB) only comprises the automation components (AK1, ... , AK4) as participating nodes (TK1, ... , TK6).

3. The system as claimed in claim 1, wherein the decentralized database (DB) comprises other participating nodes (TK1, ... , TK6) in addition to the automation components (AK1, ... , AK4).

4. The system as claimed in at least one of the preceding claims, wherein the policy (RG) is saved as a program code on each of the participating nodes (TK1, ... , TK6), said program code being executed by the participating nodes (TK1, ... , TK6).

5. The system as claimed in at least one of the preceding claims, wherein the policy (RG) contains algorithms which check whether the policy (RG) is imminently going to be violated when executed on the participating nodes (TK1, ... , TK6).

6. The system as claimed in claim 5, wherein the algorithms comprise AI-based assessments for the purpose of checking whether the policy (RG) is imminently going to be violated.

7. The system as claimed in claim 6, wherein the results generated by an AI assessment of a participating node (TK1, ... , TK6) are shared with the algorithms of the other participating nodes (TK1, ... , TK6).

8. The system as claimed in claim 5, wherein the algorithms comprise threshold-based assessments for the purpose of checking whether the policy (RG) is imminently going to be violated.

9. The system as claimed in at least one of claims 5 to 8, wherein the policy (RG) has different kinds of algorithms and wherein the participating nodes (TK1, ... , TK6) are configured to select at least one of the algorithms and execute it or them depending on the resources available to each participating node (TK1, ... , TK6).

10. The system as claimed in at least one of the preceding claims, wherein the policy (RG) has a dynamic section and a static section, wherein the content of the static section cannot be changed and wherein the content of the dynamic section can be changed and/or expanded.

11. The system as claimed in claim 10, which is configured in such a way that the content of the dynamic section is changed and/or expanded if this is allowed by a predefined number of participating nodes (TK1, ... , TK6).

12. The system as claimed in at least one of the preceding claims, wherein the policy (RG) comprises the following rules:
- Services via which the participating nodes (TK1, ... , TK6) are permitted to communicate with other participating nodes (TK1, ... , TK6) in accordance with the policy;
- A permitted range of values in which measured values included in the transactions between the participating nodes (TK1, ... , TK6) are provided;
- A maximum packet rate and bandwidth for each participating node (TK1, ... , TK6);
- A maximum number of simultaneous connections for a participating node (TK1, ... , TK6);
- A maximum ratio between time and new connections for a participating node (TK1, ... , TK6);
- A maximum time for existing connections from or to a participating node (TK1, ... , TK6);
- Error rate for connections between participating nodes (TK1, ... , TK6);
- Resource usage of a participating node (TK1, ... , TK6);
- Behavior of measured values and control values
- Automation communication patterns (e.g. behavior of the acyclic and cyclic communication of the real-time bus)
- Parameter settings
- Data and communication heuristics or patterns
- Meta communication data;
- Interface usage of a participating node (TK1, ... , TK6).

## Revendications

1. Système de la technique d'automatisation, comprenant :
- une base de données (DB) décentralisée et répartie selon la technique Distributed Ledger, notamment une chaîne de blocs, laquelle base de données comprend une pluralité de noeuds d'abonnés (TK1, ..., TK6), les noeuds d'abonnés (TK1, ..., TK6) étant configurés pour échanger entre eux des données ou des informations par des transactions (TA), la base de données (DB) étant conçue pour mémoriser les transactions (TA), notamment dans des blocs de données (BL1, BL2, BL3) reliés entre eux ;
- un ensemble de règles (RG) implémenté sur chacun des noeuds d'abonnés (TK1, ..., TK6), l'ensemble de règles (RG) comprenant des informations sur le nombre et l'identité de tous les noeuds d'abonnés (TK1, ..., TK6), ainsi que des règles concernant les actions, les propriétés et les états de chacun des noeuds d'abonnés (TK1, ..., TK6) ; et
une pluralité de composants d'automatisation (AK1, ..., AK4), lesquels composants sont des noeuds d'abonnés (TK1, ..., TK6) de la base de données décentralisée (DB),
chacun des noeuds d'abonnés (TK1, ..., TK6) étant configuré pour vérifier ou valider à tout moment des transactions (TA) entre les noeuds d'abonnés (TK1, ..., TK6) à l'aide de l'ensemble de règles (RG),
chacun des noeuds d'abonnés (TK1, ..., TK6) étant configuré pour exécuter au moins l'une des mesures suivantes en cas de détection d'une violation de l'ensemble de règles (RG) :
i. Blocage de la communication au sein de la base de données (BD) avec un noeud d'abonné concerné (TK1, ..., TK6) ;
ii. Arrêt de la communication en dehors de la base de données (BD) avec un noeud d'abonné concerné (TK1, ..., TK6) ;
iii. Fermeture des ports ;
iv. Arrêt des services de chaque noeud d'abonné (TK1, ..., TK6).

2. Système selon la revendication 1, pour lequel la base de données décentralisée (DB) comprend exclusivement les composants d'automatisation (AK1, ..., AK4) en tant que noeuds d'abonnés (TK1, ..., TK6).

3. Système selon la revendication 1, pour lequel la base de données décentralisée (DB) comprend, outre les composants d'automatisation (AK1, ..., AK4), d'autres noeuds d'abonnés (TK1, ..., TK6).

4. Système selon au moins l'une des revendications précédentes, pour lequel l'ensemble de règles (RG) est enregistré sous forme de code de programme sur chacun des noeuds d'abonné (TK1, ..., TK6), lequel code de programme est exécuté par les noeuds d'abonné (TK1, ..., TK6).

5. Système selon au moins l'une des revendications précédentes, pour lequel l'ensemble de règles (RG) comprend des algorithmes qui, lors de l'exécution sur les noeuds d'abonnés (TK1, ..., TK6), effectuent une vérification d'une violation imminente de l'ensemble de règles (RG).

6. Système selon la revendication 5, pour lequel les algorithmes comprennent des évaluations basées sur l'IA (intelligence artificielle) pour vérifier une violation imminente de l'ensemble de règles (RG).

7. Système selon la revendication 6, pour lequel les résultats obtenus après une évaluation IA d'un noeud d'abonné (TK1, ..., TK6) sont communiqués aux algorithmes des autres noeuds d'abonné (TK1, ..., TK6).

8. Système selon la revendication 5, pour lequel les algorithmes comprennent des évaluations basées sur des seuils pour vérifier une violation imminente de l'ensemble de règles (RG).

9. Système selon au moins l'une des revendications 5 à 8,
pour lequel l'ensemble de règles (RG) présente différents types d'algorithmes et pour lequel les noeuds d'abonnés (TK1, ..., TK6) sont configurés pour sélectionner et exécuter au moins l'un des algorithmes en fonction des ressources dont ils disposent respectivement.

10. Système selon au moins l'une des revendications précédentes, pour lequel l'ensemble de règles (RG) comprend une partie dynamique et une partie statique, le contenu de la partie statique étant invariable et le contenu de la partie dynamique étant modifiable et/ou extensible.

11. Système selon la revendication 10, lequel système est conçu de telle sorte que le contenu de la partie dynamique est modifié et/ou étendu en cas d'accord d'une proportion prédéterminée des noeuds d'abonnés (TK1, ...,TK6).

12. Système selon au moins l'une des revendications précédentes, pour lequel l'ensemble de règles (RG) comprend les règles suivantes :
- des services par l'intermédiaire desquels les noeuds d'abonnés (TK1 ..., TK6) peuvent respectivement communiquer avec d'autres noeuds d'abonnés (TK1, ..., TK6) conformément à l'ensemble de règles (RG) ;
- une gamme de valeurs autorisées, gamme dans laquelle sont prévues les valeurs de mesure contenues dans les transactions des noeuds d'abonnés (TK1, ..., TK6) ;
- un débit de paquets et une largeur de bande maximum d'un noeud d'abonné respectif (TK1, ..., TK6) ;
- un nombre maximal de connexions simultanées d'un noeud d'abonné (TK1, ...TK6) ;
- un rapport maximal entre le temps et les nouvelles connexions d'un noeud d'abonné (TK1, ..., TK6) ;
- un temps maximal pour les connexions existantes en provenance ou à destination d'un noeud d'abonné (TK1, ..., TK6) ;
- un taux d'erreur pour les connexions entre noeuds d'abonnés (TK1, ..., TK6) ;
- l'utilisation des ressources d'un noeud d'abonné (TK1, ..., TK6) ;
- le comportement des valeurs de mesure et de commande
- des modèles de communication d'automatisation (p. ex. comportement de la communication acyclique et cyclique du bus temps réel)
- des réglages de paramètres
- des heuristiques de données et de communication ou des modèles
- des données de métacommunication ;
- l'utilisation de l'interface d'un noeud d'abonné (TK1, ..., TK6).
